# EUROPEAN PATENT SPECIFICATION

(11) **EP 4 170 415 B1**
(45) Date of publication and mention of the grant of the patent: **08.07.2026**
(21) Application number: 21826883.7
(22) Date of filing: 16.06.2021
(51) Int. Cl.: G02C 11/00, H04R 1/10, H02J 7/00, G02C 5/22, G02C 5/14, G02C 11/06, H04R 5/033

(54) **SMART GLASSES, WIRELESS EARPHONES, WEARABLE DEVICE ASSEMBLY AND CONTROL METHOD THEREFOR**
INTELLIGENTE BRILLE, DRAHTLOSE OHRHÖRER, TRAGBARE VORRICHTUNGSANORDNUNG UND STEUERUNGSVERFAHREN DAFÜR
LUNETTES INTELLIGENTES, ÉCOUTEURS SANS FIL, ENSEMBLE DISPOSITIF POUVANT ÊTRE PORTÉ ET PROCÉDÉ DE COMMANDE ASSOCIÉ

(30) Priority: 19.06.2020 CN 202010571326
(43) Date of publication of application: 26.04.2023
(73) Proprietor: Vivo Mobile Communication Co., Ltd., Dongguan, Guangdong 523863 (CN)
(72) Inventor: LIN, Zhenye, Dongguan, Guangdong 523863 (CN); FU, Shaoru, Dongguan, Guangdong 523863 (CN)
(74) Representative: Raffay & Fleck
(86) International application number: PCT/CN2021/100291
(87) International publication number: WO 2021/254373

(56) References cited:
- WO-A1-2017/003226
- WO-A2-2006/023341
- CN-A- 108 431 673
- CN-A- 108 490 644
- CN-A- 110 361 875
- CN-A- 110 361 875
- CN-A- 111 158 169
- CN-A- 111 650 748
- CN-U- 205 958 868
- CN-U- 209 472 734
- CN-U- 210 534 470
- CN-U- 210 573 058
- US-A1- 2007 291 220

## Description

### TECHNICAL FIELD

This application relates to the technical field of smart wearable devices, and in particular to a pair of smart glasses, a pair of wireless earphones, a wearable device assembly, and a control method therefor.

### BACKGROUND

In today's society, various electronic products emerge in endlessly. To make users enjoy convenience brought by electronic products without disturbing surrounding environments, a function of earphones cannot be ignored. With the rapid development of science and technology in recent years, wireless earphones gradually appear in people's life. Wireless earphones are favored by users because they are easy to carry. Such earphones can avoid various inconveniences in use of traditional wired earphones.

Nowadays, an increasing number of functions are integrated on the wireless earphones, which leads to greater power consumption of the wireless earphones. Moreover, due to small sizes of the wireless earphones, sizes of batteries set on the wireless earphones are small, resulting in a small capacity of the batteries, so that a battery life of the wireless earphones is insufficient. Therefore, to make the wireless earphones have a long battery life, existing wireless earphones are generally required to be equipped with an earphone box provided with a battery, so that the earphone box can charge the wireless earphones. However, the wireless earphones need to be put in the earphone box when being charged. In this case, a user cannot wear the wireless earphones. Accordingly, the user has no way of using the wireless earphones, which affects use experience of the user.

CN110361875A provides glasses, which comprise at least one wireless earphone and a glasses body used for charging the wireless earphone, wherein at least one glasses temple of the glasses body is internally provided with a charging device, the glasses temple has an opening end, and a charging end of the wireless earphone passes through the opening end and is inserted into the charging device, so as to charge the wireless earphone. The glasses realize the effect of charging the wireless earphone by just inserting the wireless earphone into a charging jack of the glasses temple when the wireless earphone runs out of power on the premise that the earphone has no wire harness connection, and ensure the normal operation of the wireless earphone.

WO 2017003226Al relates to an ear hook unit for preventing separation, an eyeglass frame having the ear hook unit, and eyeglasses having the eyeglasses frame, the eyeglasses further having separate ear hooks at ear hooks, which are hung on the ears when the eyeglasses are worn, so as to change the wearing position of the eyeglasses, thereby enabling the eyeglasses to be worn even when the eyeglasses are separated from the main part of a face for reasons such as face washing and applying makeup, or when objects are looked at without using lenses for a reason such as nearsightedness.

US200729120A1 relates to eyeglasses and eyeglass frames comprising adjustable earpieces to align and attach to the wearer's ears or earlobes, thus avoiding contact with the wearer's hairline and hair, and minimizing contact with the skin.

### SUMMARY

This application discloses a pair of smart glasses, a pair of wireless earphones, a wearable device assembly, and a control method therefor, which can resolve a problem that a user has no way of using the wireless earphones during charging.

To resolve the foregoing technical problem, this application is implemented as follows.

According to a first aspect, an embodiment of this application discloses the pair of smart glasses of claim 1.

According to a second aspect, an embodiment of this application discloses a pair of wireless earphones, where the wireless earphone can be electrically connected to a pair of smart glasses, and the smart glasses includes a main body and a pair of glasses legs, where one glasses leg is connected to the main body, and the glasses leg can be rotatably switched between a first position and a second position relative to the main body, the glasses leg is provided with a first electrical connection part, at least one of the glasses leg and the main body is provided with a battery module, and the first electrical connection part is electrically connected to the battery module, and the wireless earphone is provided with a second electrical connection part;
in a case that the glasses leg is located at the first position, the glasses leg is separated from the wireless earphone; and in a case that the glasses leg is located at the second position, the wireless earphone is connected to the glasses leg, and the first electrical connection part is electrically connected to the second electrical connection part.

According to a third aspect, an embodiment of this application discloses a wearable device assembly, including the foregoing smart glasses and the foregoing wireless earphones, and the smart glasses can be electrically connected to the wireless earphones.

According to a fourth aspect, an embodiment of this application discloses a control method for a wearable device assembly, applied to the foregoing wearable device assembly, and including:
detecting a current position of the glasses leg, where the current position of the glasses leg includes the first position and the second position;
controlling, in a case that the current position is the first position, the first electrical connection part to be powered off; and
controlling, in a case that the current position is the second position, the first electrical connection part to be powered on.

According to a fifth aspect, an embodiment of this application discloses a control apparatus for a wearable device assembly, where the wearable device assembly is the foregoing wearable device assembly, and the control apparatus includes:
a detection module, configured to detect a current position of the glasses leg, where the current position of the glasses leg includes the first position and the second position;
a first control module, configured to control, in a case that the current position is the first position, the first electrical connection part to be powered off, and
a second control module, configured to control, in a case that the current position is the second position, the first electrical connection part to be powered on.

According to a sixth aspect, an embodiment of this application discloses a wearable device assembly, including a processor, a memory, and a program or an instruction stored in the memory and capable of running on the processor, where when the program or the instruction is executed by the processor, the steps of the foregoing control method are implemented.

According to a seventh aspect, an embodiment of this application discloses a readable storage medium, where the readable storage medium stores a program or an instruction, and the program or the instruction is executed by a processor to implement the steps of the foregoing control method.

The technical solutions used in this application can achieve the following beneficial effects.

In the smart glasses disclosed in this application, the glasses leg can be rotatably switched between the first position and the second position relative to the main body. In addition, in a case that the glasses leg is located at the first position, the glasses leg is separated from the wireless earphone, and in a case that the glasses leg is located at the second position, the glasses leg is connected to the wireless earphone, and the first electrical connection part is electrically connected to the second electrical connection part. The smart glasses can charge or supply power to the wireless earphone by changing a position of the glasses leg. While the wireless earphone is being charged or supplied with power in this way, the user can continue to use the smart glasses and the wireless earphone, so that it can be prevented that the wireless earphone is required to be put into an earphone box when being charged and the wireless earphone cannot be worn when being charged, and then it can be prevented that the user has no way of using the wireless earphone. Accordingly, use experience can be improved for the user.

### BRIEF DESCRIPTION OF DRAWINGS

To describe the technical solutions in the embodiments of this application or in the background art more clearly, the drawings required for describing the embodiments or the background art are described briefly below. Obviously, other drawings can be obtained by those of ordinary skill in the art based on these drawings without creative efforts.
FIG. 1 is a schematic diagram of a glasses leg at a first position of smart glasses in a wearable device assembly disclosed in an embodiment of this application;
FIG. 2 is a schematic diagram of the glasses leg at a second position of the smart glasses in the wearable device assembly disclosed in an embodiment of this application;
FIG. 3 is a schematic diagram of the smart glasses disclosed in an embodiment of this application;
FIG. 4 is a cross-sectional view of the glasses leg at the first position of the smart glasses disclosed in an embodiment of this application;
FIG. 5 is a cross-sectional view of the glasses leg at the second position of the smart glasses disclosed in an embodiment of this application;
FIG. 6 is a schematic exploded view of the smart glasses disclosed in an embodiment of this application;
FIG. 7 is a schematic diagram of a wireless earphone disclosed in an embodiment of this application;
FIG. 8 is a schematic diagram of FIG. 7 at another viewing angle;
FIG. 9 is a schematic diagram of a wearable device assembly used by a user;
FIG. 10 is another schematic diagram of the wearable device assembly used by the user; and
FIG. 11 is a schematic diagram of the wearable device assembly.

Reference numerals in the accompanying drawings are as follows:
100-Smart glasses, 110-Main body, 111-Rotation stopping part, 112-Glasses frame, 113-Connection section, 120-Glasses leg, 121-First electrical connection part, 121a-First electrical connection terminal, 121b-First connector, 122-Limiting surface, 200-Wireless earphone, 210-Second electrical connection part, 210a-Second electrical connection terminal, 210b-Second connector, 220-Earphone body, 230-Speaker;
1200-Wearable device assembly, 1201-Radio frequency unit, 1202-Network module, 1203-Audio output unit, 1204-Input unit, 1205-Sensor, 1206-Display unit, 1207-User input unit, 1208-Interface unit, 1209-Memory, 1210-Processor, 1211-Power supply.

### DESCRIPTION OF EMBODIMENTS

To make the objectives, technical solutions, and advantages of this application clearer, the following clearly and completely describes the technical solutions of this application with reference to the specific embodiments of this application and the corresponding accompanying drawings. Apparently, the described embodiments are merely some rather than all of the embodiments of this application. All other embodiments obtained by a person of ordinary skill in the art based on the embodiments of this application without creative efforts shall fall within the protection scope of this application.

Terms "first" and "second" in the specification and claims of this application are used to distinguish between similar objects, and are not used to describe a specific order or sequence. It should be understood that data used in this way may be interchangeable in appropriate cases, so that the embodiments of this application can be implemented in a sequence other than those shown or described herein. In addition, objects distinguished by "first", "second", and the like usually belong to one type, and the number of the objects is not limited. For example, there may be one or more first objects. In addition, in the specification and the claims, "and/or" represents at least one of connected objects, and the character "/" generally represents an "or" relationship between associated objects.

With reference to the following drawings, technical solutions disclosed by various embodiments of this application will be explained in detail through specific embodiments and application scenarios thereof.

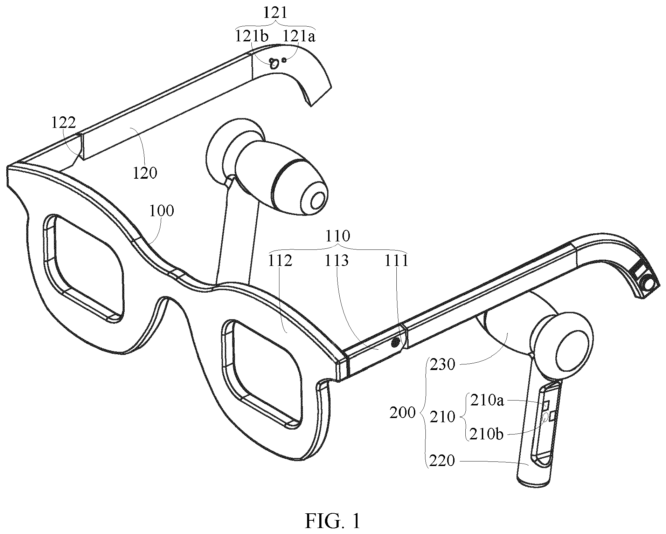

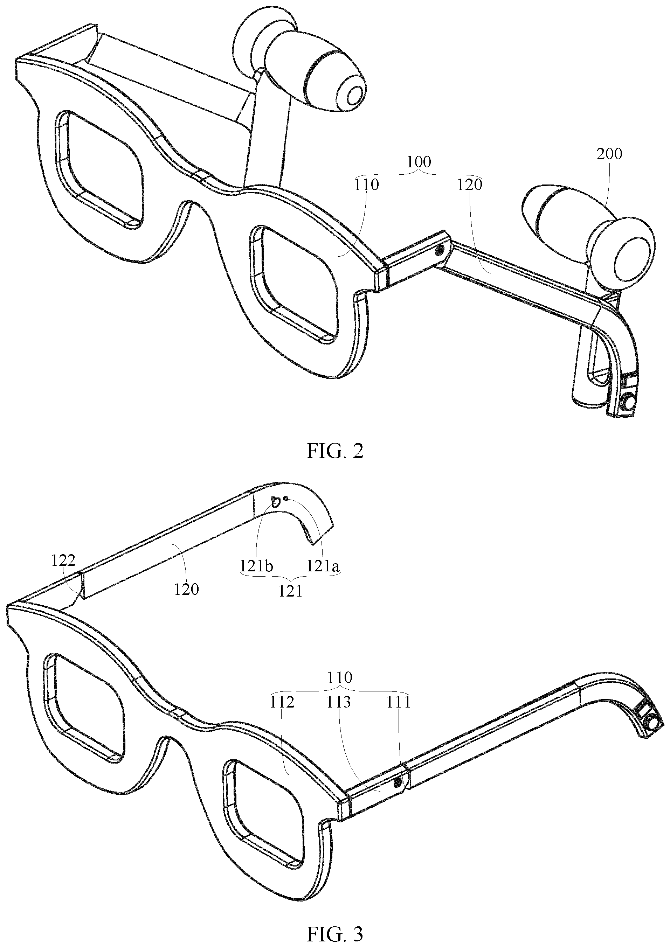

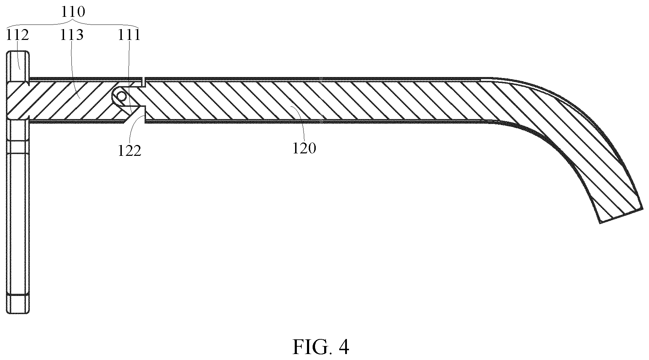

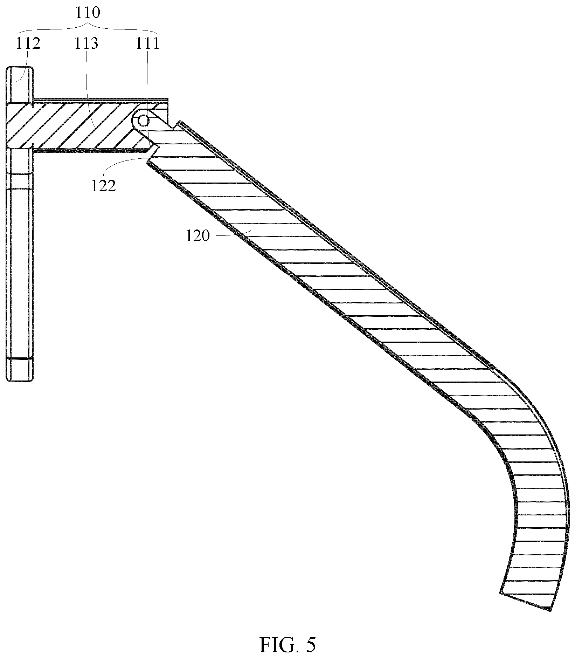

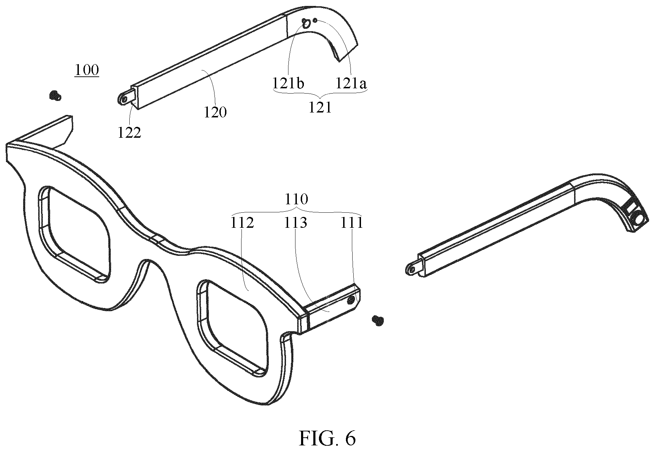

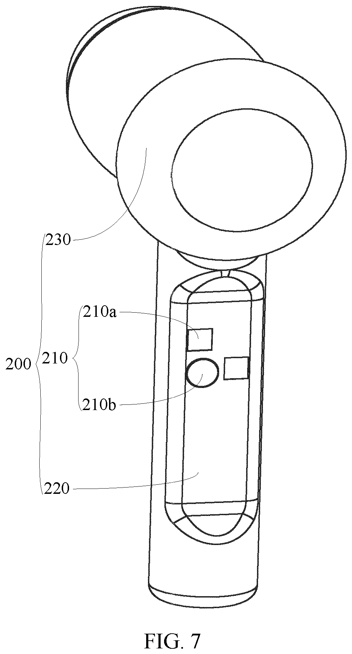

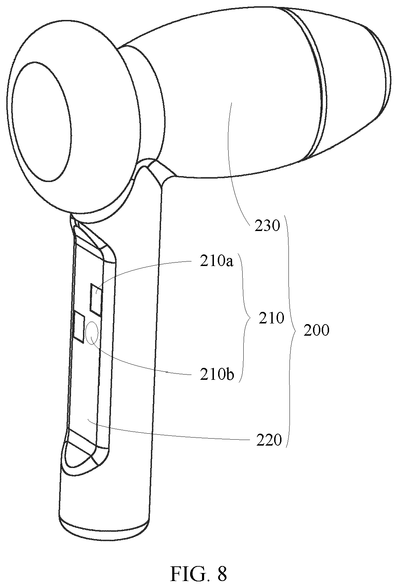

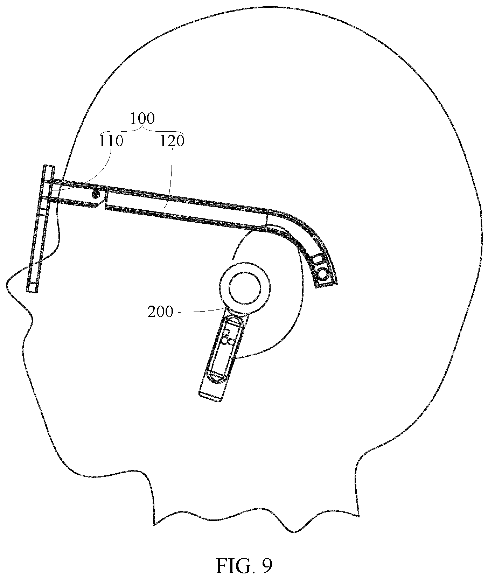

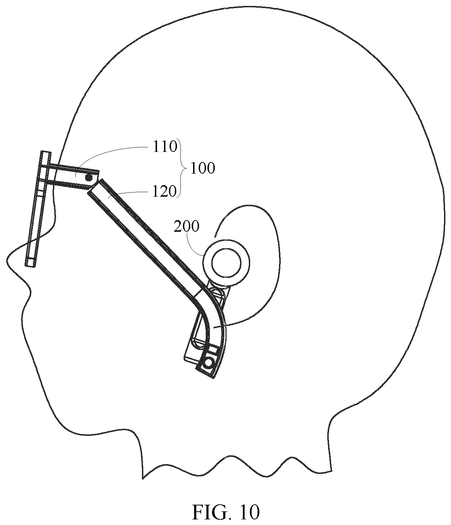

Please refer to FIG. 1 to FIG. 10, an embodiment of this application discloses a pair of smart glasses 100. The disclosed smart glasses 100 can be electrically connected to a pair of wireless earphones 200, one wireless earphone 200 is provided with a second electrical connection part 210, and a user can supply power to or charge the wireless earphone 200 through the second electrical connection part 210. Definitely, the wireless earphone 200 can also be in data connection with other kinds of electronic devices through the second electrical connection part 210.

The smart glasses 100 include a main body 110 and a pair of glasses legs 120, where the main body 110 is a basic member of the smart glasses 100, and the main body 110 can provide a mounting basis for other components of the smart glasses 100. The main body 110 generally includes an optical module holder, the optical module holder can provide a mounting basis for an optical component of the smart glasses 100, and the optical component may be a spectacle lens and a display screen. The glasses legs 120 are used for wearing the smart glasses 100.

The smart glasses 100 generally further include a battery module, and at least one of the main body 110 and the glasses legs 120 are provided with the battery module. Definitely, the main body 110 and the glasses legs 120 may both be provided with battery modules, so that the smart glasses 100 have a great battery capacity, and the smart glasses 100 have a long battery life. One glasses leg 120 is provided with a first electrical connection part 121, and the first electrical connection part 121 is electrically connected to the battery module, so that the user can charge the battery module through the first electrical connection part 121. Alternatively, the battery module supplies power to or charges other kinds of electronic devices through the first electrical connection part 121. Definitely, the smart glasses 100 can also be in data connection with other kinds of electronic devices through the first electrical connection part 121.

The glasses leg 120 is rotatably connected to the main body 110, so that the glasses leg 120 can be rotatably switched between a first position and a second position relative to the main body 110. In a case that the glasses leg 120 is located at the first position, the glasses leg 120 is separated from the wireless earphone 200. In this case, the wireless earphone 200 works independently from the smart glasses 100, and the wireless earphone 200 does not need to be charged or supplied with power by the smart glasses 100, or the wireless earphone 200 does not need to be in data connection with the smart glasses 100. In a case that the glasses leg 120 is located at the second position, the glasses leg 120 is connected to the wireless earphone 200, and the first electrical connection part 121 is electrically connected to the second electrical connection part 210. In this case, the smart glasses 100 charge or supply power to the wireless earphone 200 through the first electrical connection part 121 and the second electrical connection part 210. Alternatively, the smart glasses 100 are in data connection with the wireless earphone 200 through the first electrical connection part 121 and the second electrical connection part 210, so that data exchange can be implemented between the smart glasses 100 and the wireless earphone 200.

In a specific use process of the user, when the wireless earphone 200 needs to be supplied with power or charged, the user can manually drive the glasses leg 120 to rotate, so as to enable the glasses leg 120 to be rotated to the second position, so that the wireless earphone 200 is connected to the glasses leg 120, and the first electrical connection part 121 is electrically connected to the second electrical connection part 210. In this case, the smart glasses 100 charge or supply power to the wireless earphone 200 through the first electrical connection part 121 and the second electrical connection part 210, and while the wireless earphone 200 is charged or supplied with power in this way, the user can continue to use the smart glasses 100 and the wireless earphone 200. After the wireless earphone 200 is charged or when the wireless earphone does not need to be supplied with power, the user can manually drive the glasses leg 120 to rotate, to enable the glasses leg 120 to rotate from the second position to the first position, so that the wireless earphone 200 is separated from the glasses leg 120, and then the wireless earphone 200 works independently with the smart glasses 100. It should be noted that independent working means that the wireless earphone 200 and the smart glasses 100 work in a separate state.

In the smart glasses 100 disclosed in this application, the glasses leg 120 can be rotatably switched between the first position and the second position relative to the main body 110. In addition, in a case that the glasses leg 120 is located at the first position, the glasses leg 120 is separated from the wireless earphone 200, and in a case that the glasses leg 120 is located at the second position, the glasses leg 120 is connected to the wireless earphone 200, and the first electrical connection part 121 is electrically connected to the second electrical connection part 210. The smart glasses 100 can charge or supply power to the wireless earphone 200 by changing a position of the glasses leg 120. While the wireless earphone 200 is being charged or supplied with power in this way, the user can continue to use the smart glasses 100 and the wireless earphone 200, so that it can be prevented that the wireless earphone 200 is required to be put into an earphone box while being charged and the wireless earphone 200 cannot be worn by the user while the wireless earphone 200 is being charged, and then it can be prevented that the user has no way of using the wireless earphone 200. Accordingly, use experience can be improved for the user.

As described above, the user can manually drive the glasses leg 120 to rotate from the first position to the second position. This is to prevent the glasses leg 120 from excessively rotating when the user manually drives the glasses leg, resulting in that the glasses leg 120 is not easily connected to the wireless earphone 200, and further resulting in that the first electrical connection part 121 is not easily electrically connected to the second electrical connection part 210. Based on this, in an alternative embodiment, one end of the main body 110 connected to the glasses leg 120 may be provided with a rotation stopping part 111, and one end of the glasses leg 120 connected to the main body 110 may have a limiting surface 122. In a case that the glasses leg 120 is located at the second position, the rotation stopping part 111 and the limiting surface 122 can match each other for limitation in a rotation direction of the glasses leg 120, to limit excessive rotation of the glasses leg 120. Consequently, the glasses leg 120 can be rotated to the second position relatively accurately, and the glasses leg 120 can be connected to the wireless earphone 200 relatively accurately, and then the first electrical connection part 121 can be electrically connected to the second electrical connection part 210 relatively accurately.

In addition, after the first electrical connection part 121 is electrically connected to the second electrical connection part 210, the rotation stopping part 111 and the limiting surface 122 can restrict the glasses leg 120 from rotating from the second position to another position, so that the glasses leg 120 can be kept at the second position relatively stably. Consequently, it can be prevented that electrical connection between the first electrical connection part 121 and the second electrical connection part 210 fails because the glasses leg 120 is not easily stably keep at the second position, and then stability of the electrical connection between the first electrical connection part 121 and the second electrical connection part 210 can be increased. Accordingly, the wireless earphone 200 can be stably charged, or the smart glasses 100 can supply power for the wireless earphone 200 stably.

To further increase the stability of the electrical connection between the first electrical connection part 121 and the second electrical connection part 210, optionally, the second electrical connection part 210 may include a second electrical connection terminal 210a and a second connector 210b, and the first electrical connection part 121 may include a first electrical connection terminal 121a and a first connector 121b. In a case that the glasses leg 120 is located at the first position, the first connector 121b can be separated from the second connector 210b, and the first electrical connection terminal 121a can be separated from the second electrical connection terminal 210a. In a case that the glasses leg 120 is located at the second position, the first connector 121b may be connected to the second connector 210b, and the first electrical connection terminal 121a may be electrically connected to the second electrical connection terminal 210a.

In this case, the first electrical connection terminal 121a and the second electrical connection terminal 210a can achieve electrical connection between the wireless earphone 200 and the smart glasses 100, so that the smart glasses 100 can supply power to or charge the wireless earphone 200. In addition, the first connector 121b and the second connector 210b can enable the glasses leg 120 to be stably connected to the wireless earphone 200, to prevent the first electrical connection terminal 121a from being separated from the second electrical connection terminal 210a due to separation of the glasses leg 120 from the wireless earphone 200 during charging of the wireless earphone 200. Consequently, it can be prevented that the first electrical connection terminal 121a is not easily stably electrically connected to the second electrical connection terminal 210a, and then stability of the electrical connection between the first electrical connection part 121 and the second electrical connection part 210 can be further increased.

The first connector 121b and the second connector 210b may have various structures. For example, the first connector 121b may be a hook, and the second connector 210b may be a slot, and the hook may be detachably connected to the slot, which is not limited in the embodiment of this application. Optionally, one of the second connector 210b and the first connector 121b may be provided with a magnetically attractable component, and the other may be provided with a magnetic component. In a case that the glasses leg 120 is located at the second position, the magnetic component is magnetically connected to the magnetically attractable component. That is, the first connector 121b may be the magnetic component, and the second connector 210b may be the magnetically attractable component. Definitely, the first connector 121b may be the magnetically attractable component, and the second connector 210b may be the magnetic component.

Compared with the foregoing structure in which the hook is connected to the slot, in this structure, no hole, slot, or protrusion is required to be disposed on the glasses leg 120 and the wireless earphone 200. Consequently, appearance of the glasses leg 120 and appearance of the wireless earphone 200 are flat, and the wireless earphone 200 and the smart glasses 100 are consistent in appearance, so that the user feels good in use and has relatively great use experience.

It should be noted that the magnetic component refers to a component with magnetism, for example, the magnetic component may be an electromagnet, a permanent magnet, or the like, and the magnetically attractable component refers to a component that can be magnetically attracted, for example, the magnetically attractable component may be an electromagnet, a permanent magnet, an iron component, or the like.

As described above, the first connector 121b and the second connector 210b can enable the glasses leg 120 to be stably connected to the wireless earphone 200, and a way of implementing connection between the glasses leg 120 and the wireless earphone 200 is not limited thereto. In an optional embodiment, the second electrical connection part 210 may include a second electrical connection terminal 210a, and the first electrical connection part 121 may include a first electrical connection terminal 121a. In a case that the glasses leg 120 is located at the first position, the first electrical connection terminal 121a can be separated from the second electrical connection terminal 210a. In a case that the glasses leg 120 is located at the second position, the first electrical connection terminal 121a may be magnetically connected to and electrically connected to the second electrical connection terminal 210a. That is, the first electrical connection terminal 121a and the second electrical connection terminal 210a can enable the glasses leg 120 to be relatively stably connected to the wireless earphone 200, preventing the first electrical connection terminal 121a from being separated from the second electrical connection terminal 210a because the glasses leg 120 is separated from the wireless earphone 200 while the wireless earphone 200 is being charged. Consequently, it can be prevented that the first electrical connection terminal 121a is not easily stably electrically connected to the second electrical connection terminal 210a, and then stability of the electrical connection between the first electrical connection part 121 and the second electrical connection part 210 can be further increased.

Specifically, while the first electrical connection terminal 121a and the second electrical connection terminal 210a are electrically connected, the first electrical connection terminal 121a and the second electrical connection terminal 210a attract each other magnetically, so that the glasses leg 120 is relatively stably connected to the wireless earphone 200.

Optionally, one of the second electrical connection terminal 210a and the first electrical connection terminal 121a may be provided with an elastically electrical connection terminal, and the other may be provided with an electrical connection piece. In a case that the glasses leg 120 is located at the second position, the elastically electrical connection terminal can be electrically connected to the electrical connection piece. That is, the first electrical connection terminal 121a may be provided with the elastically electrical connection terminal, and the second electrical connection terminal 210a may be provided with the electrical connection piece. Definitely, the first electrical connection terminal 121a may also be provided with the electrical connection piece, and the second electrical connection terminal 210a may also be provided with the elastically electrical connection terminal, but this application is not limited thereto. The elastically electrical connection terminal can be elastically electrically connected to the electrical connection piece, so that the elastically electrical connection terminal can be adaptively adjusted according to an actual distance between the first electrical connection terminal 121a and the second electrical connection terminal 210a, and can elastically abut against the electrical connection piece. Stability of electrical connection between the first electrical connection terminal 121a and the second electrical connection terminal 210a can be ensured, and it can be prevented that a failure of the electrical connection occurs due to a gap between the first electrical connection terminal 121a and the second electrical connection terminal 210a.

The elastical ical connection terminal may be a conductive foam, an elastic frame, a pogo pin, and the like, and the electrical connection piece may be a metal piece, and specific types of the elastically electrical connection terminal and the electrical connection piece are not limited in the embodiment of this application.

To facilitate electrical connection between the first electrical connection part 121 and the second electrical connection part 210 after the glasses leg 120 is rotated to the second position, in an alternative embodiment, the wireless earphone 200 may include an earphone body 220 and a speaker 230. The earphone body 220 is connected to the speaker 230, and the second electrical connection part 210 can be disposed on the earphone body 220, and the speaker 230 and the second electrical connection part 210 can be located on two opposite sides of the earphone body 220. Consequently, after the user wears the wireless earphone 200, the second electrical connection part 210 can be located on one side of the earphone body 220 facing away from the user. The glasses leg 120 may include a top surface, a bottom surface, and an inner side surface connecting the top surface and the bottom surface. The first electrical connection part 121 can be disposed on the inner side surface. The first electrical connection part 121 is located on the inner side surface of the glasses leg 120 facing the user, after the user wears the smart glasses 100.

In this case, after the glasses leg 120 is rotated to the second position, the earphone body 220 is located between the user and the glasses leg 120, and the second electrical connection part 210 is located on a side of the earphone body 220 facing away from the user, so that the first electrical connection part 121 is just opposite to the second electrical connection part 210, which can help the user operate the glasses leg 120. Therefore, electrical connection between the first electrical connection part 121 and the second electrical connection part 210 can be implemented, thereby improving operation convenience for the smart glasses 100.

Further, the smart glasses 100 may further include a control switch, and the control switch can be disposed between the battery module and the first electrical connection part 121. In a case that the glasses leg 120 is located at the first position, the control switch can be in an off state. In a case that the glasses leg 120 is located at the second position, the control switch can be in an on state. When the wireless earphone 200 does not need to be supplied with power or charged, the control switch can enable the first electrical connection part 121 to be not charged, so that the first electrical connection part 121 can be prevented from being short-circuited by sweat or other foreign matters on the user's skin because the first electrical connection part 121 is close to the user's skin, and then the first electrical connection part 121 can be prevented from being easily corroded and disabled. Still further, the first electrical connection part 121 can be made of a corrosion-resistant material, or the first electrical connection part 121 can be further processed for corrosion resistance.

Specifically, the control switch can be controlled manually by the user or by control software in the smart glasses 100.

In an optional embodiment, the main body 110 can include a glasses frame 112 and a connection section 113. One end of the connection section 113 is movably connected to the glasses frame 112, and the connection section 113 can be detachably connected or rotatably connected to the glasses frame 112, which is not limited in the embodiment of this application. The glasses leg 120 can be connected to the other end of the connection section 113, and the glasses leg 120 can be rotated relative to the glasses frame 112. Specifically, in a case that the connection section 113 is rotationally connected to the glasses frame 112, a rotation axis of the connection section 113 is different from a rotation axis of the glasses leg 120. When the user wears the smart glasses 100, the smart glasses 100 have an upper side, a lower side, an inner side, and an outer side relative to the user, and the glasses leg 120 can be rotated up and down, and the connection section 113 can be rotated inside and outside.

Disposing of the connection section 113 can enable the glasses leg 120 to be rotated up and down, which can help the user drive the glasses leg 120 to be connected to the wireless earphone 200. In addition, the connection section 113 is rotated inside and outside, which can help the user wear the smart glasses 100.

As described above, the glasses leg 120 is rotatably connected to the main body 110, and there are multiple ways for the glasses leg 120 to be rotatably connected to the main body 110, for example, the glasses leg 120 is hinged with the main body 110. Optionally, the glasses leg 120 can be connected to the main body 110 through a flexible connector, and the glasses leg 120 can be rotated relative to the main body 110 through the flexible connector. Because the flexible connector has great flexibility and plasticity, the flexible connector is easily deformed and restored when subject to an external force. Specifically, the flexible connector can enable, through deformation, the glasses leg 120 to be rotated relative to the main body 110. Definitely, the flexible connector can keep its own shape when it is free from an external force, so that the glasses leg 120 can be kept at this position for rotation for a long time. Finally, the flexible connector can be restored to an initial position by an external force. There may be multiple kinds of flexible connectors, such as a memory metal strip and an aluminum connector, which is not limited in the embodiment of this application.

This way of rotary connection is simple in structure, and no connection hole or a connection shaft is required to be disposed, which facilitates disposing. In addition, after the glasses leg 120 is rotated to the second position relative to the main body 110 through the flexible connector, the flexible connector can enable the glasses leg 120 to be kept at the second position. Consequently, it can be prevented that electrical connection between the first electrical connection part 121 and the second electrical connection part 210 fails because the glasses leg 120 is not easily stably keep at the second position, and then stability of the electrical connection between the first electrical connection part 121 and the second electrical connection part 210 can be increased. Accordingly, the wireless earphone 200 can be stably charged, or the smart glasses 100 can supply power for the wireless earphone 200 stably.

Based on the smart glasses 100 disclosed in the embodiment of this application, an embodiment of this application further discloses a wireless earphone 200. The disclosed wireless earphone 200 can be electrically connected to a pair of smart glasses 100, and the smart glasses 100 are the smart glasses 100 described in any of the foregoing embodiment. Specifically, the smart glasses 100 include a main body 110 and a pair of glasses legs 120. The glasses legs 120 are connected to the main body 110. One glasses leg 120 can be rotatably switched between a first position and a second position relative to the main body 110. The glasses leg 120 is provided with a first electrical connection part 121. At least one of the glasses leg 120 and the main body 110 is provided with a battery module, and the first electrical connection part 121 is electrically connected to the battery module. The wireless earphone 200 is provided with a second electrical connection part 210. In a case that the glasses leg 120 is located at the first position, the glasses leg 120 is separated from the wireless earphone 200. In a case that the glasses leg 120 is located at the second position, the wireless earphone 200 is connected to the glasses leg 120, and the first electrical connection part 121 is electrically connected to the second electrical connection part 210.

In the embodiment of this application, the smart glasses 100 can charge or supply power to the wireless earphone 200 by changing a position of the glasses leg 120. While the wireless earphone 200 is being charged or supplied with power in this way, the user can continue to use the smart glasses 100 and the wireless earphone 200, so that it can be prevented that the wireless earphone 200 is required to be put into an earphone box while being charged and the wireless earphone 200 cannot be worn while the wireless earphone 200 is being charged, and then it can be prevented that the user has no way of using the wireless earphone 200. Accordingly, use experience can be improved for the user.

Based on the smart glasses 100 and wireless earphone 200 disclosed in the embodiment of this application, an embodiment of this application further discloses a wearable device assembly. The disclosed wearable device assembly includes the smart glasses 100 described in any of the foregoing embodiments and the wireless earphone 200 described in any of the foregoing embodiments, and the smart glasses 100 can be electrically connected to the wireless earphone 200. In the wearable device assembly disclosed in this application, the smart glasses 100 can charge or supply power to the wireless earphone 200 by changing a position of a glasses leg 120, so that it can be prevented that the wireless earphone 200 is required to be placed in an earphone box while being charged, and that a user has no way of wearing the wireless earphone 200 while the wireless earphone 200 is being charged.

Based on the wearable device assembly disclosed in the embodiment of this application, an embodiment of this application further discloses a control method for the wearable device assembly, and the disclosed control method includes the following steps.

Step 101: Detect a current position of a glasses leg 120, where the current position of the glasses leg 120 may include a first position and a second position.

Step 102: Control, in a case that the current position is the first position, a first electrical connection part 121 to be powered off.

In this case, when the wireless earphone 200 does not need to be supplied with power or charged, that the first electrical connection part 121 is powered off can enable the first electrical connection part 121 to be not charged, so that the first electrical connection part 121 can be prevented from being short-circuited by sweat or other foreign matters on the user's skin because the first electrical connection part 121 is close to the user's skin, and the first electrical connection part 121 can be prevented from being easily corroded and disabled.

Step 103: Control, in a case that the current position is the second position, the first electrical connection part 121 to be powered on.

In this case, the first electrical connection part 121 is electrified and the smart glasses 100 can supply power to or charge the wireless earphone 200 through the first electrical connection part 121.

The wearable device assembly disclosed in the embodiment of the application can achieve each process for implementing the wearable device assembly in the foregoing method embodiment, which will not be repeated herein to avoid repetition.

An embodiment of this application further discloses a control apparatus for a wearable device assembly, where the wearable device assembly is the wearable device assembly described in any of the foregoing embodiments, and the control apparatus includes the following:
a detection module, configured to detect a current position of a glasses leg 120, where the current position of the glasses leg 120 may include a first position and a second position;
a first control module, configured to control, in a case that the current position is the first position, a first electrical connection part 121 to be powered off,
where in this case, when a wireless earphone 200 does not need to be supplied with power or charged, the first control module can control the first electrical connection part 121 to be powered off, so that the first electrical connection part 121 is not electrified, and the first electrical connection part 121 can be prevented from being short-circuited by sweat or other foreign matters on the user's skin because the first electrical connection part 121 is close to the user's skin, and the first electrical connection part 121 can be prevented from being easily corroded and disabled; and
a second control module, configured to control, in a case that the current position is the second position, the first electrical connection part 121 to be powered on,
where in this case, the second control module can control the first electrical connection part 121 to be electrified, and the smart glasses 100 can supply power to or charge the wireless earphone 200 through the first electrical connection part 121.

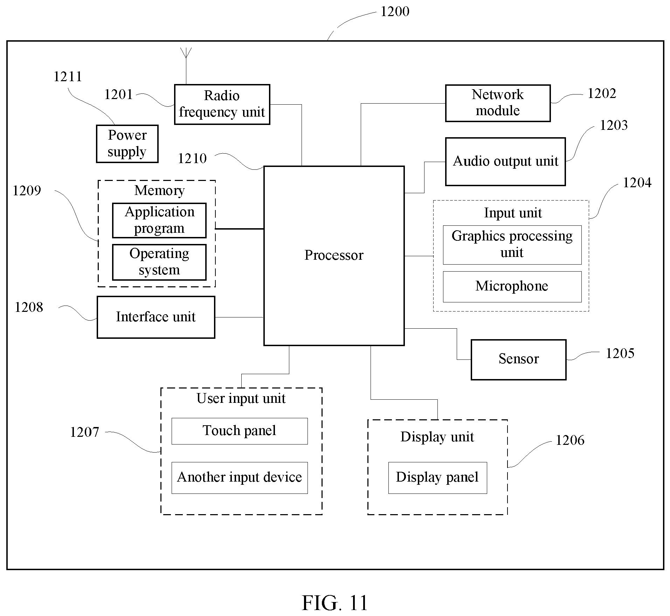

FIG. 11 is a schematic diagram of a hardware structure of a wearable device assembly for implementing various embodiments of this application.

The wearable device assembly 1200 includes but is not limited to components such as a radio frequency unit 1201, a network module 1202, an audio output unit 1203, an input unit 1204, a sensor 1205, a display unit 1206, a user input unit 1207, an interface unit 1208, a memory 1209, a processor 1210, and a power supply 1211. A person skilled in the art may understand that a structure of the wearable device assembly shown in FIG. 11 does not constitute a limitation to the wearable device assembly, and the wearable device assembly may include more or fewer components than those shown in the figure, a combination of some components, or different component arrangements. In this embodiment of this application, the wearable device assembly includes, but is not limited to, a mobile phone, a tablet computer, a notebook computer, a palmtop computer, a vehicle-mounted terminal, a pedometer, and the like.

The sensor 1205 is configured to detect a current position of a glasses leg 120. In a case that the current position is a first position, the processor 1210 controls a first electrical connection part 121 to be powered off. In a case that the current position is a second position, the processor 1210 controls the first electrical connection part 121 to be powered on. When the wireless earphone 200 does not need to be supplied with power or charged, that the first electrical connection part 121 is powered off can enable the first electrical connection part 121 to be not electrified, so that the first electrical connection part 121 can be prevented from being short-circuited by sweat or other foreign matters on the user's skin because the first electrical connection part 121 is close to the user's skin, and the first electrical connection part 121 can be prevented from being easily corroded and disabled.

The interface unit 1208 is an interface for connecting an external apparatus to the wearable device assembly 1200. For example, the external apparatus may include a wired or wireless headphone port, an external power supply port, a wired or wireless data port, a storage card port, a port used to connect to an apparatus having an identity module, an audio input/output port, a video I/O port, a headset port, and the like. The interface unit 1208 may be configured to: receive an input from the external apparatus, and transmit the received input to one or more elements in the wearable device assembly 1200, or may be configured to transmit data between the wearable device assembly 1200 and the external apparatus.

The memory 1209 may be configured to store a software program and various pieces of data. The memory 1209 may mainly include a program storage area and a data storage area, where the program storage area may store an operating system, an application program required by at least one function, and the like; and the data storage area may store data created according to use of the wearable device assembly, and the like. In addition, the memory 1209 may include a high-speed random access memory, and may further include a nonvolatile memory, for example, at least one magnetic disk storage device, a flash storage device, or another volatile solid-state storage device.

The processor 1210 is a control center of the wearable device assembly. The processor uses various interfaces and lines to connect all parts of the entire wearable device assembly, and performs various functions and data processing of the wearable device assembly by running or executing the software program and/or module stored in the memory 1209 and invoking data stored in the memory 1209, thereby performing overall monitoring on the wearable device assembly. The processor 1210 may include one or more processing units. Optionally, an application processor and a modem processor may be integrated into the processor 1210. The application processor mainly processes an operating system, a user interface, an application program, and the like. The modem processor mainly processes wireless communications. It can be understood that, alternatively, the modem processor may not be integrated into the processor 1210.

The wearable device assembly 1200 may further include a power supply 1211 which supplies power to all parts. Optionally, the power supply 1211 may be in a logical connection with the processor 1210 through a power supply management system, thus conducting functions such as management on charging and discharging and management on power consumption through the power supply management system.

In addition, the wearable device assembly 1200 includes some function modules not shown, and details are not described.

Optionally, an embodiment of this application further discloses a wearable device assembly, including a processor 1210, a memory 1209, and a program or an instruction stored in the memory 1209 and capable of running on the processor 1210, where when the program or the instruction is executed by the processor 1210, each process of any of the foregoing method embodiments is implemented, and a same technical effect can be achieved. To avoid repetition, details are not described herein again.

An embodiment of this application further discloses a readable storage medium, where the readable storage medium stores a program or an instruction, and when the program or the instruction is executed by a processor, each process of any of the foregoing method embodiments is implemented, and a same technical effect can be achieved. To avoid repetition, details are not described herein again. The readable storage medium is, for example, a read-only memory, a random access memory, a magnetic disk, an optical disc, or the like.

It should be noted that in this specification, the term "include", "including", or any other variant is intended to cover non-exclusive inclusion, so that a process, a method, an article, or an apparatus that includes a series of elements includes not only those elements but also other elements that are not explicitly listed, or includes elements inherent to such process, method, article, or apparatus. In the absence of more restrictions, an element defined by the statement "including a..." does not exclude another same element in a process, a method, an article, or an apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

According to the descriptions of the foregoing implementation manners, a person skilled in the art may clearly understand that the foregoing method embodiments may be implemented by using software and a required universal hardware platform, or certainly may be implemented by using hardware. However, in many cases, the former is a better implementation manner. Based on such understanding, the technical solutions of this application substantially, or the part(s) thereof making contributions to the prior art, can be embodied in the form of a software product. The computer software product is stored in a storage medium that includes several instructions to enable a wearable device assembly to perform the method described in the embodiments of this application.

The embodiments of this application are described with reference to the accompanying drawings. Under enlightenment of this application, a person of ordinary skill in the art may make many forms without departing from the objective and the scope of the claims of this application, and these forms all fall within the protection scope of this application.

The foregoing embodiments of this application focus on describing differences between the embodiments, and different optimization features of the embodiments may be combined to form better embodiments provided that they are not contradictory. Considering brevity, details are not described herein again.

## Claims

1. A pair of smart glasses (100), wherein the smart glasses (100) is capable of being electrically connected to a pair of wireless earphones (200), one wireless earphone is provided with a second electrical connection part (210), **characterized in that**, the smart glasses (100) comprise:
a main body (110); and
a pair of glasses legs (120), wherein each of the glasses legs (120) is hinged with the main body (110), or each of the glasses legs (120) are connected to the main body (110) through a flexible connector, each of the glasses legs (120) is rotatably connected to the main body (110) to allow the glasses legs (120) to rotate up in a first position and down in a second position relative to the main body (110) when a user wears the smart glasses, and the glasses legs (120) are capable of being rotatably switched between the first position and the second position relative to the main body (110); and the glasses legs (120) are provided with a first electrical connection part (121), at least one of the glasses legs (120) or the main body (110) is provided with a battery module, and the first electrical connection part (121) is electrically connected to the battery module;
in a case that the glasses legs (120) are located at the first position, the glasses legs (120) are separated from the wireless earphone (200); and in a case that the glasses legs (120) are located at the second position, the glasses legs (120) are connected to the wireless earphone (200), and the first electrical connection part (121) is electrically connected to the second electrical connection part (210).

2. The smart glasses according to claim 1, wherein one end of the main body (110) connected to each of the glasses legs (120) is provided with a rotation stopping part (111), and one end of each of the glasses legs (120) connected to the main body (110) is provided with a limiting surface (122), and in a case that the glasses legs (120) are located at the second position, the rotation stopping part (111) and the limiting surface (122) match each other for limitation in a rotation direction of the glasses legs (120).

3. The smart glasses according to claim 1, wherein the second electrical connection part (210) comprises a second electrical connection terminal (210a) and a second connector (210b), and the first electrical connection part (121) comprises a first electrical connection terminal (121a) and a first connector (121b);
in a case that the glasses legs (120) are located at the first position, the first connector (121b) is separated from the second connector (210b), and the first electrical connection terminal (121a) is separated from the second electrical connection terminal (210a); and
in a case that the glasses legs (120) are located at the second position, the first connector (121b) is connected to the second connector (210b), and the first electrical connection terminal (121a) is electrically connected to the second electrical connection terminal (210a).

4. The smart glasses according to claim 3, wherein one of the second connector (210b) and the first connector (121b) is provided with a magnetically attractable component, and the other is provided with a magnetic component; and in a case that the glasses legs (120) are located at the second position, the magnetic component is magnetically connected to the magnetically attractable component.

5. The smart glasses according to claim 1, wherein the second electrical connection part (210) comprises a second electrical connection terminal (210a), and the first electrical connection part (121) comprises a first electrical connection terminal (121a);
in a case that the glasses legs (120) are located at the first position, the first electrical connection terminal (121a) is separated from the second electrical connection terminal (210a); and
in a case that the glasses legs (120) are located at the second position, the first electrical connection terminal (121a) is magnetically connected to and electrically connected to the second electrical connection terminal (210a).

6. The smart glasses according to any one of claims 3 to 5, wherein one of the second electrical connection terminal (210a) and the first electrical connection terminal (121a) is provided with an elastically electrical connection terminal, and the other is provided with an electrical connection piece; and in a case that the glasses legs (120) are located at the second position, the elastically electrical connection terminal is electrically connected to the electrical connection piece.

7. The smart glasses according to claim 1, wherein the wireless earphone (200) comprises an earphone body (220) and a speaker (230), the earphone body (200) is connected to the speaker (230), the second electrical connection part (210) is disposed on the earphone body (220), the speaker (230) and the second electrical connection part (210) are located on two opposite sides of the earphone body (220), the glasses legs (120) comprise a top surface, a bottom surface, and an inner side surface connecting the top surface to the bottom surface, and the first electrical connection part (121) is disposed on the inner side surface.

8. The smart glasses according to claim 1, wherein the main body (110) comprises a glasses frame (112) and a connection section (113), wherein one end of the connection section (113) is movably connected to the glasses frame (112), the glasses legs (120) are connected to the other end of the connection section (113), and the glasses legs (120) are capable of being rotated relative to the glasses frame (112);
the glasses legs (120) are hinged with the connection section (113), or the glasses legs (120) are connected to the connection section (113) through a flexible connector.

9. The smart glasses according to claim 1, wherein the smart glasses (100) further comprise a control switch, and the control switch is disposed between the battery module and the first electrical connection part (121);
in a case that the glasses leg (120) is located at the first position, the control switch is in an off state; and in a case that the glasses legs (120) are located at the second position, the control switch is in an on state.

10. A control method for the smart glasses according to claim 1, **characterized in that**, comprising:
detecting a current position of the glasses legs (120), wherein the current position of the glasses legs (120) comprises the first position and the second position;
controlling, in a case that the current position is the first position, the first electrical connection part (121) to be powered off; and
controlling, in a case that the current position is the second position, the first electrical connection part (121) to be powered on.

11. A control apparatus for the smart glasses according to claim 1, **characterized in that**, the control apparatus comprises:
a detection module, configured to detect a current position of the glasses legs (120), wherein the current position of the glasses legs (120) comprises the first position and the second position;
a first control module, configured to control, in a case that the current position is the first position, the first electrical connection part (121) to be powered off, and
a second control module, configured to control, in a case that the current position is the second position, the first electrical connection part (121) to be powered on.

12. A readable storage medium storing a program, **characterized in that**, the program or the instruction, when executed by a processor, performs the control method according to claim 10, wherein the processor is a processor of the smart glasses of one of claims 1 to 9.

## Patentansprüche

1. Intelligente Brille (100), wobei die intelligente Brille (100) mit einem Paar drahtloser Ohrhörer (200) elektrisch verbunden werden kann, wobei ein drahtloser Ohrhörer mit einem zweiten elektrischen Verbindungsteil (210) versehen ist, **dadurch gekennzeichnet, dass** die intelligente Brille (100) Folgendes umfasst:
einen Hauptkörper (110); und
ein Paar Brillenbügel (120), wobei jeder der Brillenbügel (120) drehgelenkig mit dem Hauptkörper (110) verbunden ist oder jeder der Brillenbügel (120) durch einen flexiblen Verbinder mit dem Hauptkörper (110) verbunden ist, jeder der Brillenbügel (120) drehbar mit dem Hauptkörper (110) verbunden ist, sodass die Brillenbügel (120) relativ zum Hauptkörper (110) nach oben in eine erste Position und nach unten in eine zweite Position gedreht werden können, wenn ein Benutzer die intelligente Brille trägt, und die Brillenbügel (120) relativ zum Hauptkörper (110) zwischen der ersten Position und der zweiten Position drehbar verstellt werden können; und die Brillenbügel (120) mit einem ersten elektrischen Verbindungsteil (121) versehen sind, wobei mindestens einer der Brillenbügel (120) und/oder der Hauptkörper (110) mit einem Batteriemodul versehen ist, und das erste elektrische Verbindungsteil (121) mit dem Batteriemodul elektrisch verbunden ist;
ein einem Fall, in dem sich die Brillenbügel (120) in der ersten Position befinden, die Brillenbügel (120) vom drahtlosen Ohrhörer (200) getrennt sind; und in einem Fall, in dem sich die Brillenbügel (120) in der zweiten Position befinden, die Brillenbügel (120) mit dem drahtlosen Ohrhörer (200) verbunden sind, und das erste elektrische Verbindungsteil (121) mit dem zweiten elektrischen Verbindungsteil (210) elektrisch verbunden ist.

2. Intelligente Brille nach Anspruch 1, wobei ein Ende des mit jedem der Brillenbügel (120) verbundenen Hauptkörpers (110) mit einem Drehstoppteil (111) versehen ist und ein mit dem Hauptkörper (110) verbundenes Ende jedes der Brillenbügel (120) mit einer Begrenzungsfläche (122) versehen ist, und in einem Fall, in dem sich die Brillenbügel (120) in der zweiten Position befinden, das Drehstoppteil (111) und die Begrenzungsfläche (122) zur Begrenzung in einer Drehrichtung der Brillenbügel (120) zusammenpassen.

3. Intelligente Brille nach Anspruch 1, wobei das zweite elektrische Verbindungsteil (210) einen zweiten elektrischen Verbindungsanschluss (210a) und einen zweiten Verbinder (210b) umfasst, und das erste elektrische Verbindungsteil (121) einen ersten elektrischen Verbindungsanschluss (121a) und einen ersten Verbinder (121b) umfasst;
in einem Fall, in dem sich die Brillenbügel (120) in der ersten Position befinden, der erste Verbinder (121b) von dem zweiten Verbinder (210b) getrennt ist und der erste elektrische Verbindungsanschluss (121a) vom zweiten elektrischen Verbindungsanschluss (210a) getrennt ist; und
in einem Fall, in dem sich die Brillenbügel (120) in der zweiten Position befinden, der erste Verbinder (121b) mit dem zweiten Verbinder (210b) verbunden ist und der erste elektrische Verbindungsanschluss (121a) mit dem zweiten elektrischen Verbindungsanschluss (210a) elektrisch verbunden ist.

4. Intelligente Brille nach Anspruch 3, wobei einer von dem zweiten Verbinder (210b) und dem ersten Verbinder (121b) mit einer magnetisch anziehbaren Komponente versehen ist und der andere mit einer magnetischen Komponente versehen ist; und in einem Fall, in dem sich die Brillenbügel (120) in der zweiten Position befinden, die magnetische Komponente mit der magnetisch anziehbaren Komponente magnetisch verbunden ist.

5. Intelligente Brille nach Anspruch 1, wobei das zweite elektrische Verbindungsteil (210) einen zweiten elektrischen Verbindungsanschluss (210a) umfasst und das erste elektrische Verbindungsteil (121) einen ersten elektrischen Verbindungsanschluss (121a) umfasst;
in einem Fall, in dem sich die Brillenbügel (120) in der ersten Position befinden, der erste elektrische Verbindungsanschluss (121a) vom zweiten elektrischen Verbindungsanschluss (210a) getrennt ist; und
in einem Fall, in dem sich die Brillenbügel (120) in der zweiten Position befinden, der erste elektrische Verbindungsanschluss (121a) mit dem zweiten elektrischen Verbindungsanschluss (210a) magnetisch verbunden ist und elektrisch verbunden ist.

6. Intelligente Brille nach einem der Ansprüche 3 bis 5, wobei einer von dem zweiten elektrischen Verbindungsanschluss (210a) und dem ersten elektrischen Verbindungsanschluss (121a) mit einem elastischen elektrischen Verbindungsanschluss versehen ist und der andere mit einem elektrischen Verbindungsteil versehen ist; und in einem Fall, in dem sich die Brillenbügel (120) in der zweiten Position befinden, der elastische elektrische Verbindungsanschluss mit dem elektrischen Verbindungsteil elektrisch verbunden ist.

7. Intelligente Brille nach Anspruch 1, wobei der drahtlose Ohrhörer (200) einen Ohrhörerkörper (220) und einen Lautsprecher (230) umfasst, der Ohrhörerkörper (200) mit dem Lautsprecher (230) verbunden ist, das zweite elektrische Verbindungsteil (210) an dem Ohrhörerkörper (220) angeordnet ist, sich der Lautsprecher (230) und das zweite elektrische Verbindungsteil (210) auf zwei gegenüberliegenden Seiten des Ohrhörerkörpers (220) befinden, die Brillenbügel (120) eine obere Fläche, eine untere Fläche und eine innere Seitenfläche, die die obere Fläche mit der unteren Fläche verbindet, umfassen, und das erste elektrische Verbindungsteil (121) an der inneren Seitenfläche angeordnet ist.

8. Intelligente Brille nach Anspruch 1, wobei der Hauptkörper (110) einen Brillenrahmen (112) und einen Verbindungsabschnitt (113) umfasst, wobei ein Ende des Verbindungsabschnitts (113) bewegbar mit dem Brillenrahmen (112) verbunden ist, die Brillenbügel (120) mit dem anderen Ende des Verbindungsabschnitts (113) verbunden sind und die Brillenbügel (120) relativ zum Brillengestell (112) gedreht werden können;
die Brillenbügel (120) drehgelenkig mit dem Verbindungsabschnitt (113) verbunden sind oder die Brillenbügel (120) durch einen flexiblen Verbinder mit dem Verbindungsabschnitt (113) verbunden sind.

9. Intelligente Brille nach Anspruch 1, wobei die intelligente Brille (100) ferner einen Steuerungsschalter umfasst und der Steuerungsschalter zwischen dem Batteriemodul und dem ersten elektrischen Verbindungsteil (121) angeordnet ist;
in einem Fall, in dem sich der Brillenbügel (120) in der ersten Position befindet, sich der Steuerungsschalter in einem Aus-Zustand befindet; und in einem Fall, in dem sich die Brillenbügel (120) in der zweiten Position befinden, sich der Steuerungsschalter in einem Ein-Zustand befindet.

10. Steuerungsverfahren für die intelligente Brille nach Anspruch 1, **dadurch gekennzeichnet, dass** es Folgendes umfasst:
Erkennen einer aktuellen Position der Brillenbügel (120), wobei die aktuelle Position der Brillenbügel (120) die erste Position und die zweite Position umfasst;
in einem Fall, in dem die aktuelle Position die erste Position ist, Steuern des ersten elektrischen Verbindungsteils (121), sodass es ausgeschaltet wird; und
in einem Fall, in dem die aktuelle Position die zweite Position ist, Steuern des ersten elektrischen Verbindungsteils (121), sodass es eingeschaltet wird.

11. Steuerungsvorrichtung für die intelligente Brille nach Anspruch 1, **dadurch gekennzeichnet, dass** die Steuerungsvorrichtung Folgendes umfasst:
ein Erkennungsmodul, konfiguriert zum Erkennen einer aktuellen Position der Brillenbügel (120), wobei die aktuelle Position der Brillenbügel (120) die erste Position und die zweite Position umfasst;
ein erstes Steuerungsmodul, dazu konfiguriert, in einem Fall, in dem die aktuelle Position die erste Position ist, das erste elektrische Verbindungsteil (121) so zu steuern, dass es ausgeschaltet wird, und
ein zweites Steuerungsmodul, dazu konfiguriert, in einem Fall, in dem die aktuelle Position die zweite Position ist, das erste elektrische Verbindungsteil (121) so zu steuern, dass es eingeschaltet wird.

12. Lesbares Speichermedium, das ein Programm speichert, **dadurch gekennzeichnet, dass** das Programm oder die Anweisung bei Ausführung durch einen Prozessor das Steuerungsverfahren nach Anspruch 10 ausführt, wobei der Prozessor ein Prozessor der intelligenten Brille nach einem der Ansprüche 1 bis 9 ist.

## Revendications

1. Paire de lunettes intelligentes (100), dans laquelle les lunettes intelligentes (100) peuvent être connectées électriquement à une paire d'écouteurs sans fil (200), un écouteur sans fil étant muni d'une seconde partie de connexion électrique (210), **caractérisée en ce que** les lunettes intelligentes (100) comprennent:
un corps principal (110); et
une paire de branches de lunettes (120), dans laquelle chacune des branches de lunettes (120) est articulée sur le corps (110), ou chacune des branches de lunettes (120) est reliée au corps principal (110) par l'intermédiaire d'un connecteur flexible, chacune des branches de lunettes (120) est reliée de manière rotative au corps principal (110) pour permettre aux branches de lunettes (120) de pivoter vers le haut dans une première position et vers le bas dans une seconde position par rapport au corps principal (110) lorsqu'un utilisateur porte les lunettes intelligentes, et les branches de lunettes (120) peuvent être basculées de manière rotative entre la première position et la seconde position par rapport au corps principal (110); et
les branches de lunettes (120) sont pourvues d'une première partie de connexion électrique (121), au moins l'une des branches de lunettes (120) ou le corps principal (110) est pourvu d'un module de batterie, et la première partie de connexion électrique (121) est connectée électriquement au module de batterie;
lorsque les branches de lunettes (120) sont replacées dans la première position, les branches de lunettes (120) sont séparées de l'écouteur sans fil (200); et
lorsque les branches de lunettes (120) se trouvent dans la seconde position, les branches de lunettes (120) sont connectées à l'écouteur sans fil (200), et la première partie de connexion électrique (121) est connectée électriquement à la seconde partie de connexion électrique (210).

2. Lunettes intelligentes selon la revendication 1, dans lesquelles une extrémité du corps principal (110) reliée à chacune des branches de lunettes (120) est pourvue d'une partie d'arrêt de rotation (111), et une extrémité de chacune des branches de lunettes (120) reliée au corps principal (110) est pourvue d'une surface de butée (122),
et au cas où les branches de lunettes (120) sont repositionnées dans la seconde position, la partie d'arrêt de rotation (111) et la surface de limitation (122) s'emboîtent l'une dans l'autre pour limiter la rotation des branches de lunettes (120).

3. Lunettes intelligentes selon la revendication 1, dans lesquelles la seconde partie de connexion électrique (210) comprend une seconde borne de connexion électrique (210a) et un second connecteur (210b), et la première partie de connexion électrique (121) comprend une première borne de connexion électrique (121a) et un premier connecteur (121b) ;
au cas où les branches de lunettes (120) se trouvent dans la première position, le premier connecteur (121b) est séparé du second connecteur (210b), et la première borne de connexion électrique (121a) est séparée de la seconde borne de connexion électrique (210a); et
au cas où les branches de lunettes (120) se trouvent dans la seconde position, le premier connecteur (121b) est connecté au second connecteur (210b), et la première borne de connexion électrique (121a) est connectée électriquement à la seconde borne de connexion électrique (210a).

4. Lunettes intelligentes selon la revendication 3, dans lesquelles l'un des deux connecteurs (210b) et (121b) est muni d'un composant magnétiquement attractif, et l'autre est muni d'un composant magnétique; et au cas où les branches de lunettes (120) se trouvent dans la seconde position, le composant magnétique est connecté magnétiquement au composant magnétiquement attractif.

5. Lunettes intelligentes selon la revendication 1, dans lesquelles la seconde partie de connexion électrique (210) comprend une seconde borne de connexion électrique (210a), et la première partie de connexion électrique (121) comprend une première borne de connexion électrique (121a);
au cas où les branches de lunettes (120) se trouvent dans la première position, la première borne de connexion électrique (121a) est séparée de la seconde borne de connexion électrique (210a); et
lorsque les branches de lunettes (120) se trouvent dans la seconde position, la première borne de connexion électrique (121a) est reliée magnétiquement et électriquement à la seconde borne de connexion électrique (210a).

6. Lunettes intelligentes selon l'une quelconque des revendications 3 à 5, dans lesquelles l'une des bornes de connexion électrique (210a) et de la première borne de connexion électrique (121a) est pourvue d'une borne de connexion électrique élastique, et l'autre est pourvue d'une pièce de connexion électrique; et au cas où les branches de lunettes (120) se trouvent dans la seconde position, la borne de connexion électrique élastique est connectée électriquement à la pièce de connexion électrique.

7. Lunettes intelligentes selon la revendication 1, dans lesquelles l'écouteur sans fil (200) comprend un corps d'écouteur (220) et un haut-parleur (230), le corps d'écouteur (200) est connecté au haut-parleur (230), la seconde partie de connexion électrique (210) est disposée sur le corps d'écouteur (220), le haut-parleur (230) et la seconde partie de connexion électrique (210) sont situés sur deux côtés opposés du corps d'écouteur (220), les branches de lunettes (120) comprennent une surface supérieure, une surface inférieure et une surface latérale interne reliant la surface supérieure à la surface inférieure, et la première partie de connexion électrique (121) est disposée sur la surface latérale interne.

8. Lunettes intelligentes selon la revendication 1, dans lesquelles le corps principal (110) comprend une monture de lunettes (112) et une section de connexion (113), dans lesquelles une extrémité de la section de connexion (113) est reliée de manière mobile à la monture de lunettes (112), les branches de lunettes (120) sont reliées à l'autre extrémité de la section de connexion (113), et les branches de lunettes (120) peuvent pivoter par rapport à la monture de lunettes (112);
les branches de lunettes (120) sont articulées sur la section de connexion (113), ou les branches de lunettes (120) sont reliées à la section de connexion (113) par l'intermédiaire d'un connecteur flexible.

9. Lunettes intelligentes selon la revendication 1, dans lesquelles les lunettes intelligentes (100) comprennent en outre un commutateur de commande, et le commutateur de commande est disposé entre le module de batterie et la première partie de connexion électrique (121) ;
au cas où la branche de lunettes (120) se trouve dans la première position, le commutateur de commande est désactivé; et au cas où la branche de lunettes (120) se trouve dans la seconde position, le commutateur de commande est activé.

10. Procédé de commande pour les lunettes intelligentes selon la revendication 1, **caractérisé en ce qu'**il comprend:
la détection d'une position actuelle des branches de lunettes (120), dans laquelle la position actuelle des branches de lunettes (120) comprend la première position et la seconde position;
la capacité de commander, au cas où la position actuelle est la première position, la première partie de connexion électrique (121) pour la mettre hors tension; et
la capacité de commander, au cas où la position actuelle est la seconde position, la première partie de connexion électrique (121) pour la mettre sous tension.

11. Dispositif de commande pour les lunettes intelligentes selon la revendication 1, **caractérisé en ce que** le dispositif de commande comprend:
un module de détection, configuré pour détecter une position actuelle des branches de lunettes (120),
dans lequel la position actuelle des branches de lunettes (120) comprend la première position et la seconde position;
un premier module de commande, configuré pour commander, au cas où la position actuelle est la première position, la mise hors tension de la première partie de connexion électrique (121), et
un second module de commande, configuré pour commander, au cas où la position actuelle est la seconde position, la mise sous tension de la première partie de connexion électrique (121).

12. Support de stockage lisible stockant un programme, **caractérisé en ce que** le programme ou l'instruction, en cas d'exécution par un processeur, met en œuvre le procédé de commande selon la revendication 10, dans lequel le processeur est un processeur des lunettes intelligentes de l'une des revendications 1 à 9.
